(19) **Europäisches Patentamt**

**European Patent Office**

**Office européen des brevets**

(11) **EP 1 530 344 A1**

(12) **EUROPEAN PATENT APPLICATION**

(43) Date of publication:
**11.05.2005 Bulletin 2005/19**

(51) Int Cl.$^7$: **H04M 1/02**, H04N 5/225

(21) Application number: **03025602.8**

(22) Date of filing: **06.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **High Tech Computer Corp.**
**Taoyuan (TW)**

(72) Inventor: **Hung-Yao Yeh, Darren**
**Yonghe City Taipei County 234 (TW)**

(74) Representative: **Becker Kurig Straus**
**Patentanwälte**
**Bavariastrasse 7**
**80336 München (DE)**

(54) **Handheld electronic device having a rotatable image-capturing device**

(57)     A rotatable image-capturing device (230) for a handheld electronic device (200) is provided. The image-capturing device comprises a lens (232), a photosensitive element (234), a reflector (240) and a rotatable reflector seat (246). The photo-sensitive element and the reflector are located at the opposite ends of an optical axis of the lens. A reflecting surface (242) of the reflector forms an included angle with the optical axis of the lens so that light from an object is reflected by the reflector through the lens onto the photo-sensitive element to form an image thereon. In addition, the reflector is pivoted to the rotatable reflector seat and the rotatable reflector seat is set around the lens. The reflector is free to rotate through 360° to reflect image of objects onto the photo-sensitive element through the lens so that viewing range of the image-capturing device is substantially improved.

FIG. 2A

FIG. 2B

**Description**

BACKGROUND OF THE INVENTION

Field of the Invention

The present invention relates to a handheld electronic device, like a mobile phone. More particularly, the present invention relates to a handheld electronic device having a rotatable image-capturing device.

Description of the Related Art

With great advance in electronic technology, small and portable handheld electronic devices proliferate in the market. Handheld electronic devices including mobile phones, pocket PCs, personal digital assistants (PDAs) are used everywhere. Because handheld devices can be connected through a wireless communication network or the Internet, they have become one of the most efficient and convenient means for processing mobile information.

In the past, mobile phone manufacturers would advertise about the quality of their communication products to promote sale in the market. However, with the maturation of the second generation of mobile communication systems and the arrival of the third generation mobile communication systems, a mobile phone is no longer limited to the provision of communication alone but a multitude of wireless communication services. For example, a third generation mobile phone must be capable of downloading ring tones, graphic forms or songs, uploading and downloading of photos, accommodating a photo album and managing audio/video input and output. These accessory functions may include a miniature digital camera with an image-capturing device that comprises a photo/image sensitive element and a lens.

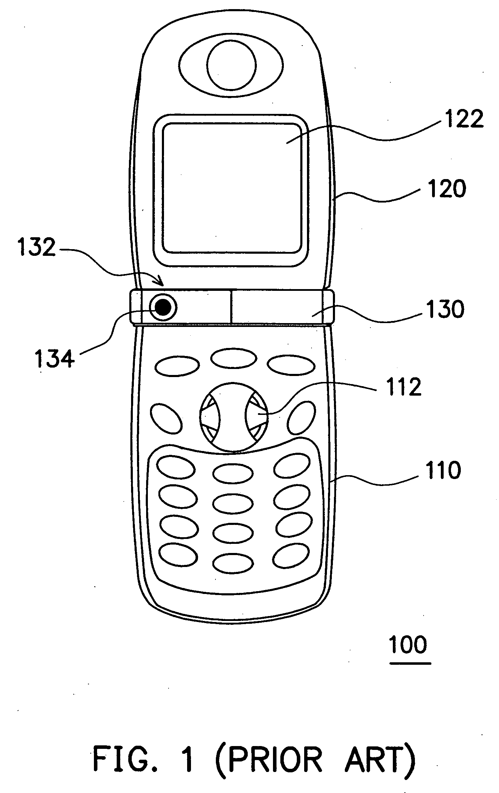

Fig. 1 is a front view of a conventional clamshell type mobile phone with a rotatable image-capturing device. As shown in Fig. 1, the mobile phone 100 has a rotatable image-capturing device capable of turning up to 180°. The mobile phone 100 mainly comprises a main body casing 110, a flip cover 120 and an image-capturing device 132 (only the lens 134 is shown). The flip cover 120 is connected to the main body casing 110 via a pivot structure (such as a hinge) 130 so that the flip cover 120 can rotate relative to the body casing 110. Furthermore, the image-capturing device 132 has a photo/image sensitive element (not shown) positioned behind the lens 134. The image-capturing device 132 may take pictures in various directions according to the rotation of the image-capturing device 132. For example, when the lens 134 of the image-capturing device 132 faces a user, a screen 122 on the flip cover 120 may display an image of the user. If the user then presses down a functional key 112 on the keypad of the main body casing 110, an image of the user is captured and stored inside the digital camera. On the other hand, if the image-capturing device 132 rotates 180° so that the lens 134 now faces other people or scene opposite the user, the screen on the flip cover 120 displays that person or scene. Similarly, if the user presses down a functional key 112 on the keypad on the main body casing 110, the image is captured and stored inside the digital camera.

To bring images in various directions into view, the conventional rotatable image-capturing device 132 must be installed on a rotatable structure. Since images received by the photo/image sensitive element are transmitted to a CPU of the mobile phone 100 by wires (not shown), rotation of the image-capturing device 132 also causes the rotation of the wires. Frequent rotation of the wires may cause the electrical connection between the wires and the photo/image sensitive element to be broken, which results in a malfunction of the image-capturing device 132. Furthermore, the available viewing angles of the image-capturing device 132 are almost limited to the front and rear directions of the mobile phone 100. For the objects located beside the mobile phone 100, the image-capturing device 132 cannot capture their images, except to change to the orientation of the mobile phone 100. Finally, due to the space limitation, the lens 134 in the prior art can only be a single lens, rather than a lens group, which enormously affects the resolution capability of the image-capturing device 132.

SUMMARY OF THE INVENTION

Accordingly, at least one objective of the present invention is to provide a handheld electronic device having a rotatable image-capturing device having a wider viewing angle to facilitate operation.

At least a second objective of this invention is to provide a handheld electronic device having a rotatable image-capturing device; the lens and photo/image sensitive element inside the rotatable image-capture device do not have to follow in step with the rotation of a rotatable structure in order to view in different directions. Hence, the rotatable image-capturing device is more reliable in operation. An additional objective of the present invention is to provide a handheld electronic device having a rotatable image-capturing device which has a space large enough to accommodate a lens group as the image-capturing lens, thereby to improve the resolution capability of the rotatable image-capturing device.

To achieve these and other advantages and in accordance with the purpose of the invention, as embodied and broadly described herein, the invention provides a handheld electronic device having a rotatable image capturing device. The rotatable image-capturing device comprises a lens, a photo-sensitive element device (for example, a CCD (charge-coupled device)), a reflector and a rotatable reflector seat. The photo-sensitive element is set up at one end of the optical axis of the lens. The reflecting surface of the reflector is set at an angle relative to the optical axis of the lens so that an image can be reflected by the reflecting surface into the lens and then projected onto the photo-sensitive element. In addition, the reflector is pivoted on the rotatable reflector seat. The rotatable reflector seat surrounds the lens and has a rotating radius centered upon the lens so that an image from any directions can be reflected into the lens by the reflector by rotating the reflector seat.

This invention also provides a handheld electronic device having an image-capturing device with a reflector. The image-capturing device comprises a lens, a photo-sensitive element and a reflector. The lens has an optical axis. The photo-sensitive element device is set up at one end of the optical axis of the lens. In addition, the reflector is set up at the other end of the optical axis of the lens. The reflector has a reflecting surface set at an angle relative to the optical axis of the lens so that an image can be reflected by the reflecting surface into the lens and then projected onto the photo-sensitive element.

According to one preferred embodiment of this invention, the lens, photo-sensitive element and the reflector are set up on one of the side edges of the handheld electronic device. Typically, the reflecting surface of the reflector is set at an angle of about 45° from the optical axis of the lens. Furthermore, the reflector is able to rotate 360° along with the rotation of the rotatable reflector seat so that scenes in whatever direction, front/back and up/down can be refleced via the reflecting surface of the reflector through the lens into the photo-sensitive element.

In brief, this invention provides a handheld electronic device having an image-capturing device with a rotatable system comprising a reflector and a rotatable reflector seat that can rotate in 360° to capture scenes in various directions. Hence, it is possible to capture scenes falling within a wide viewing angle. In addition, the lens and the photo-sensitive element need not follow any rotating structure as in a convention image-capturing device. Therefore, the image-capturing device is easier to assemble, and is more reliable in operation.

It is to be understood that both the foregoing general description and the following detailed description are exemplary, and are intended to provide further explanation of the invention as claimed.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,

Fig. 1 is a front view of a conventional clamshell type mobile phone with a rotatable image-capturing device.

Figs. 2A and 2B show a front view and a side view of a clamshell type mobile phone having a rotatable image-capturing device according to one preferred embodiment of this invention.

Figs. 3 and 4 show a rotatable reflector of the rotatable image-capturing device of the mobile phone of Figs. 2A and 2B, which is opened and oriented at two directions generally perpendicular to each other.

Fig. 5 is an exploded perspective view of a rotatable image-capturing device in accordance with the present invention.

Fig. 6 is a bar type mobile phone having a rotatable image-capturing device in accordance with the present invention mounted on a top of the mobile phone.

Fig. 7 is a clamshell type mobile phone having a rotatable image-capturing device according to a second preferred embodiment of this invention.

Fig. 8 is a clamshell type mobile phone having a rotatable image-capturing device according to a third preferred embodiment of this invention.

Fig. 9 is a magnified view of the image-capturing device in Fig. 8 with the reflector rotated upward by an angle.

Fig. 10 is a bar-type mobile phone having a rotatable image-capturing device according to a fourth preferred embodiment of this invention.

DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

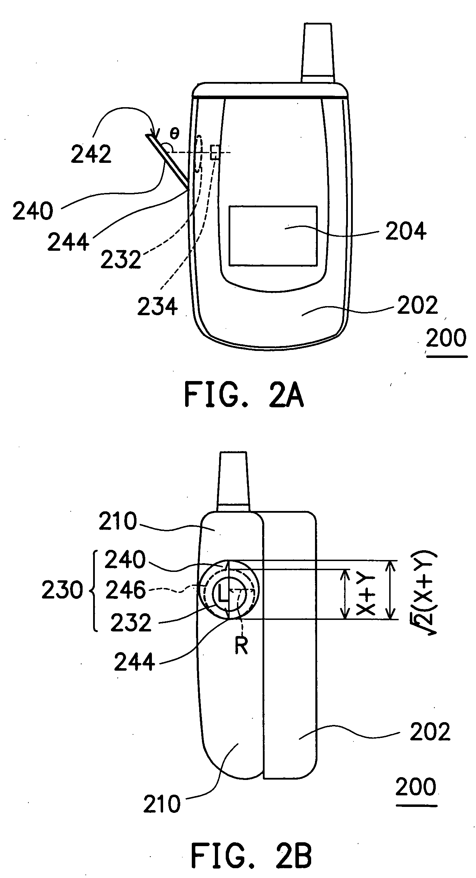

Figs. 2A and 2B show a front view and a side view of a clamshell type mobile phone 200 having a rotatable image-capturing device 230 according to one preferred embodiment of this invention. The rotatable image-capturing device 230 is set up on a lateral side of a main body casing 210 of the mobile phone 200. The mobile phone 200 has a screen (not shown) set up on an inner side of a flip cover 202 of the mobile phone 200. A second display 204 is set up on an outer side of the flip cover 202 for showing short messages or call-in numbers. The rotatable image-capturing device 230 mainly comprises a lens 232, a photo-sensitive element234, a reflector 240 and a rotatable reflector seat 246. The lens 232, the reflector 240 and the rotatable reflector seat 246 are all set up on the lateral side of the main body casing 210. One end of the optical axis of the lens 232 extends towards the photo-sensitive element 234 inside the mobile phone 200. The other end of the optical axis of the lens 232 extends outward and forms an included angle of θ° with a reflecting surface 242 on the reflector 240. An image of an object (not shown) is reflected by the reflecting surface 242 into the lens 232 and then projected onto the photo-sensitive element 234. The photo-sensitive element 234 is an electronic photosensitive device such as a complementary metal-oxide-semiconductor (CMOS) or a charge-coupled device (CCD).

In order to receive images of objects from different directions onto the photo-sensitive element 234 via the lens 232, a rotatable reflector seat 246 is set up on the lateral side of the mobile phone 200. The rotatable reflector seat 246 mounts on the main body casing 210 around the lens 232. Furthermore, an end 244 of the reflector 240 is hinged to the rotatable reflector seat 246 so an end (not labeled) of the reflector 240 opposite the end 244 can flip outward and set at a definite angle to capture images. When an image-capturing operation is completed, the reflector 240 can flip over to cover the lens 232 thereby protecting the lens against dust or dirt. In this embodiment, the reflector 240 is permitted to rotate along with the rotatable reflector seat 246 at a radius R from the center of the lens 232 so that the viewing angle can be changed. Therefore, persons or scenes in front of, behind, above or below a user can be brought to focus by rotating the reflector 240 and the rotatable reflector seat 246 through an angle of 360°. Ultimately, the viewing angle of the image-capturing device 230 is increased considerably.

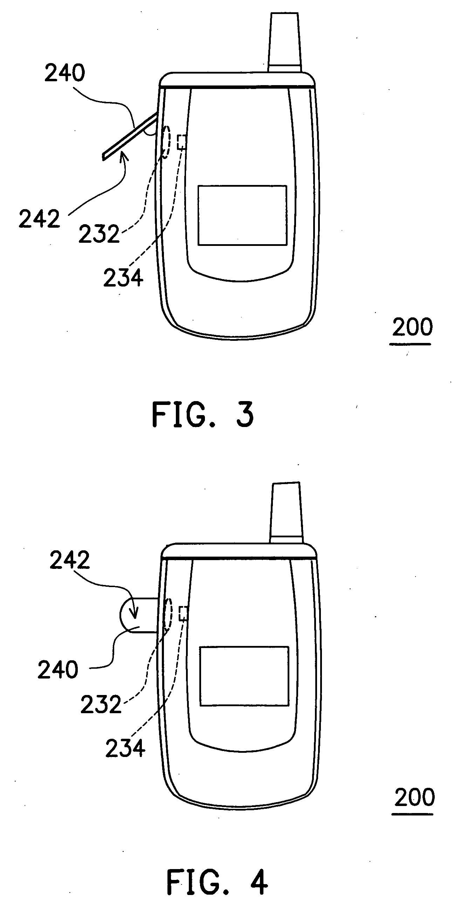

Figs. 2A, 3 and 4 show the reflector 240 being rotated with the rotatable reflector seat 246 to three different positions which are generally perpendicular to each other. In Fig. 2A, the reflector 240 is set in a position such that the reflecting surface 242 faces up. In Fig. 3, the reflector 240 is turned 180° so that the reflecting surface 242 now faces down. In Fig. 4, the reflector 240 is turned 90° so that the reflecting surface 242 faces forward. By rotating the reflector 240 to different angles, images of persons or scenes in various directions can be projected onto the photo-sensitive element 234 to form images. Aside from a planar surface, the reflecting surface 242 can also be a curve surface such as a convex mirror surface to produce a wide angle effect. Furthermore, if the pivot of the reflector 204 is separated from a center of the lens by a distance X and the lens has a diameter Y, a length L of the reflector 240 must be greater than or equal to $\sqrt{2}(X + Y)$ according to the cosine formula for an angle of 45°. Thus, the reflector 240 can effectively cover the lens 232. Obviously, other types of rotatable reflector system may be deployed. For example, the rotatable reflector system may be designed in such a way that the reflector and the rotatable reflector seat must be uplifted before flipping the reflector out and setting it to a 45° angle.

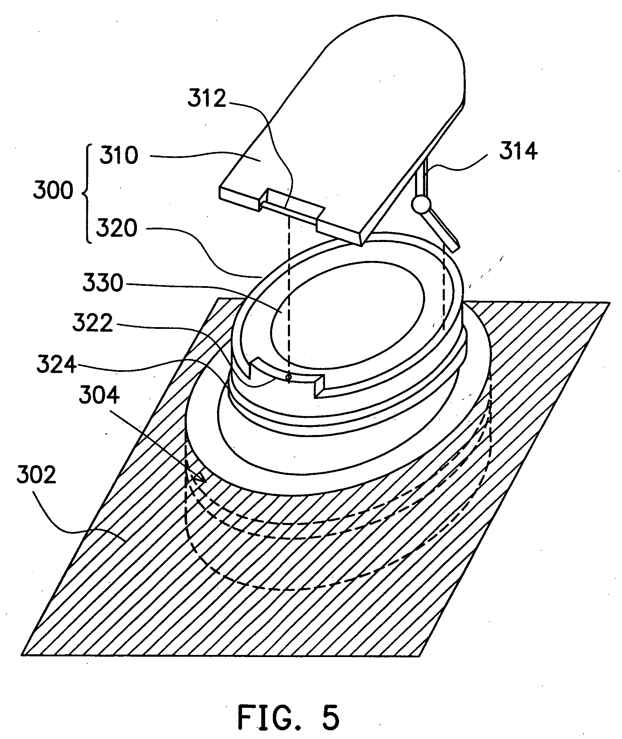

Fig. 5 is an exploded perspective view showing a rotatable image-capturing device 300 in accordance with the present invention which can be used in the mobile phones of Figs. 2A-4 and 6. As shown in Fig. 5, the rotatable image-capturing device 300 mainly comprises a reflector 310 and a rotatable reflector seat 320. A groove 304 is defined in an inner face of a cylinder formed by a main body casing 302 of a mobile phone. The rotatable reflector seat 320 has a cylindrical configuration wherein a protruding ridge 324 is formed on an outer surface of the seat 320. In assembly, the seat 320 is inserted into the main body casing 302 to a position in which the ridge 324 is fitted in the groove 304 so that the seat 320 can be rotated in the main body casing 302. A lens 330 is fixed in the main body casing 302 and surrounded by the seat 320 when the seat 320 is assembled to the main body casing 302. Furthermore, the rotatable reflector seat 320 also has a pivot section 322 for pivoting with a connecting rod 312 (for example, a link structure) at a lower end of the reflector 310. Two reflector support levers (only one shown) 314 which are bendable have ends connecting the rotatable reflector seat 320 and the reflector 310 so that the reflector 310 can be moved toward/away from the lens 330 to be positioned at closed/open positions. It can be understood that the levers 314 can be straight levers which can not be bent so that the reflector 310 can only be set at the open position, in which the reflector 310 is inclined in an angle of 45° in respect to an optical axis of the lens 330. In this embodiment, when the reflector 310 is moved to the closed position, the lens 330 is fully covered by the reflector 310 so that contamination of the lens 330 by dust particles and dirt is prevented.

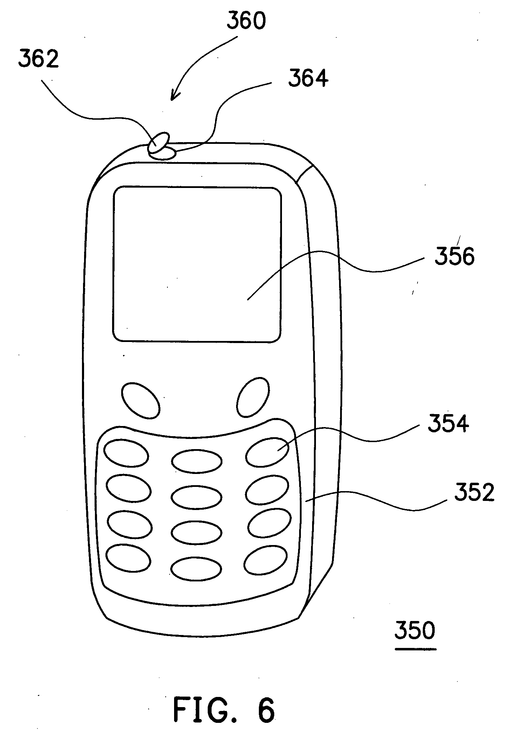

Fig. 6 is a perspective view of a bar-type mobile phone 350 mounted with a rotatable image-capturing device 360 according to the present invention. As shown in Fig. 6, the image-capturing device 360 is set up on a top of a main body casing 352 of the bar-type mobile phone 350. A reflector 362 on the image-capturing device 360 is free to rotate via a rotatable reflector seat 364 through 360° on a horizontal plane. Since the image-capturing device 360 is set up at the top of the mobile phone 350, a user gripping the lateral sides of the mobile phone 350 will not obstruct the image-capturing device 360 from taking pictures. Furthermore, because the image-capturing device 360 is set up on the top of the main body casing 352, there is no need to redesign the buttons 354 on the keypad or adjust the size of the screen 356. Moreover, the image-capturing device 360 occupies very little area of the main body casing 352.

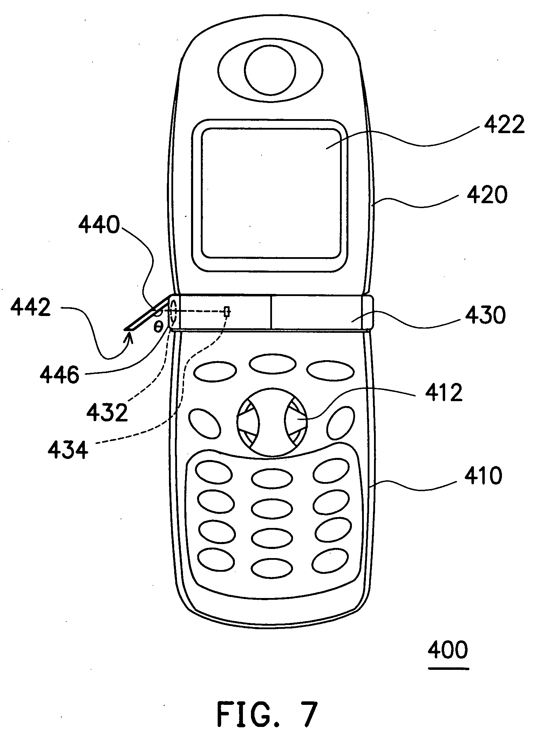

Fig. 7 is a front view of a clamshell type mobile phone 400 having a rotatable image capturing device according to a second preferred embodiment of this invention. As shown in Fig. 7, the mobile phone 400 has a main body casing 410, a flip cover 420 and a pivot structure 430. The flip cover 420 is connected to the main body casing 410 via the pivot structure 430. Furthermore, the main body casing 410 has a plurality of buttons 412 and functional keys for inputting data. A screen 422 is set up on the surface of the flip cover 420 for displaying messages. The image-capturing device comprises a lens 432, a photo-sensitive element 434 and a reflector 440 all set up within the pivot structure 430, for example, a hollow axial rod. The lens 432 is positioned at one end of the pivot structure 430 with an optical axis of the lens 432 being coincidental to a pivotal axis of the pivot structure 430. One end of the optical axis extends into the photo-sensitive element 434 inside the pivot structure 430. In addition, the other end of the optical axis of the lens 432 extends outward to form an included angle of $\theta°$ with a reflecting surface 442 of the reflector 440 so that light is reflected into the photo-sensitive element 434 from the reflector 440 through the lens 432 to form an image on the photo-sensitive element 434.

To facilitate the projection of light from various directions through the reflector 440 into the lens 432 and the photo-sensitive element 434, a rotatable reflector seat 446 is rotatably set up at one end of the pivot structure 430. The reflector 440 is hinged onto the rotatable reflector seat 446 so that the reflector 440 may rotate with the seat 446 through 360° to reflect images of objects to the photo-sensitive element 434 through the lens 432. The photo-sensitive element 434 is a complementary metal-oxide-semiconductor (CMOS) or charge-coupled device (CCD) and the reflector 440 has a planar reflecting surface of a convex reflecting surface, for example.

In this embodiment, the lens 432 and the photo-sensitive element 434 are fixed in the pivot structure 430 and do not need to rotate when the reflector 440 and the reflector seat 446 are rotated to catch images of objects in different directions. Hence, the image-capturing device is convenient to use. Furthermore, the reflector 440 can also serve as a protective cover for the lens 432 when the image-capturing device is not in use.

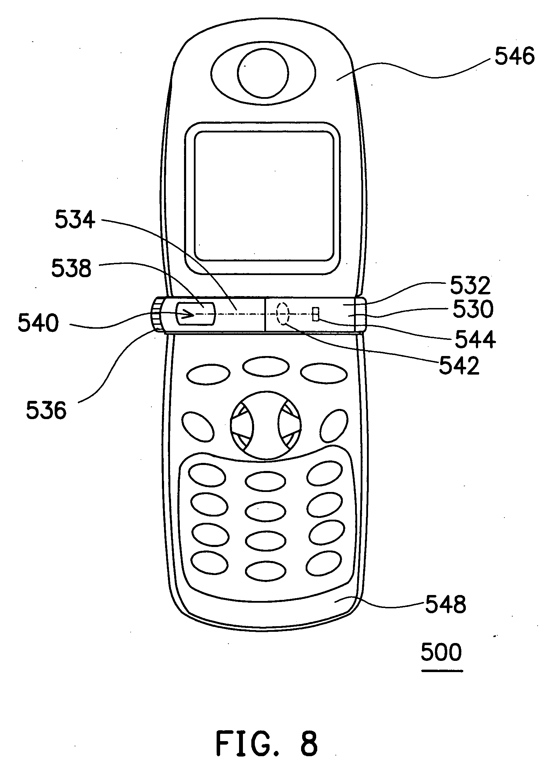

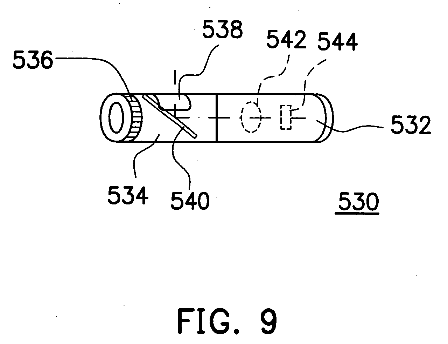

Fig. 8 is a front view of a clamshell type mobile phone 500 having a rotatable image-capturing device according to a third preferred embodiment of this invention. Fig. 9 is a perspective view of the image-capturing device in Fig. 8 in an enlarged scale with the reflector rotated upward by an angle. As shown in Fig. 8, the clamshell type mobile phone 500 has a pivot structure 530 that comprises a pivot shaft 532 and a rotatable cylinder 534 rotatably mounted to an end of the pivot shaft 532. The rotatable cylinder 534 can rotate relative to the pivot shaft 532. The pivot shaft 532 pivotably connects the flip cover 546 and the main body casing 548 together. At one end of the rotatable cylinder 534 far away from the pivot shaft 532, there is a rotating knob 536 for turning the rotatable cylinder 534 with fingers. The rotatable cylinder 534 also has an opening 538 with an internal reflector 540 set at a specified angle (preferably 45°) relative to the axis of the rotatable cylinder 534. Furthermore, a lens 542 and a photo-sensitive element 544 are set within the pivot shaft 532. When the opening 538 faces a photo object, an image of the object is reflected by the reflector 540 into the lens 542 and then projected onto the photo-sensitive element 544. Thus, a picture of the object can be taken with the clamshell type mobile phone 500.

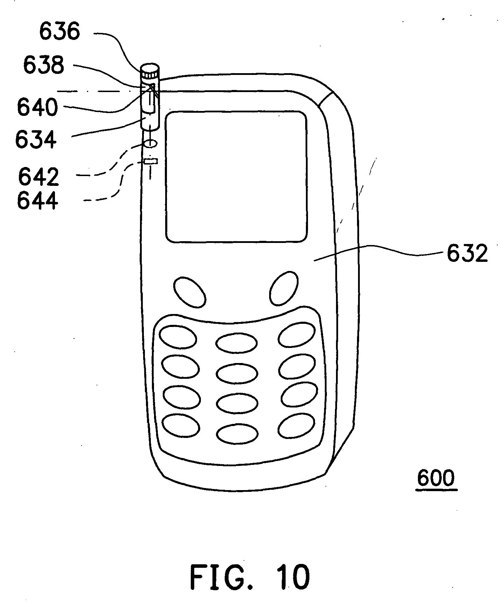

Fig. 10 is a perspective view showing a bar-type mobile phone 600 having a rotatable image-capturing device according to a fourth preferred embodiment of this invention. The mobile phone 600 in Fig. 10 has a rotatable cylinder 634 erected on an upper edge of a main body casing 632. The rotatable cylinder 634 has a rotating knob 636 at one end for turning the rotatable cylinder 634 with fingers. The rotatable cylinder 634 also has an opening 638 with an internal reflector 640 set at a specified angle (preferably 45°) relative to the axis of the rotatable cylinder. Furthermore, a lens 642 and a photo-sensitive element 644 are set in the main body casing 632 below the rotatable cylinder 634. When the opening 638 faces a photo object, an image of the object is reflected by the reflector 640 into the lens 642 and then projected onto the photo-sensitive element 644. Thus, a picture of the object can be taken with the handheld electronic device 600.

In summary, this invention provides a handheld electronic device having rotatable image-capturing device for taking a photo of an object intended by a user of the handheld electronic device. The rotatable image-capturing device comprises a lens, a photo-sensitive element, a reflector and a rotatable reflector seat. The photo-sensitive element and the reflector are positioned at the opposite ends of the optical axis of the lens. The reflecting surface of the reflector set at an angle relative to the optical axis so that an image is reflected by the reflector into the lens and projected on the photo-sensitive element. In addition, the reflector is pivoted to the rotatable reflector seat. The rotatable reflector seat is centered upon the lens so that the seat is able to rotate at a radius outside the lens for the reflector to reflect images from different directions as needed.

In conclusion, major advantages of the rotatable image-capturing device according to this invention includes:

    1. The lens and the photo-sensitive element do not have to follow the rotation of a rotating structure. Hence, assembling the image-capturing device is simpler, and operation reliability is higher.

    2. The reflector can be folded back onto the rotatable reflector seat to cover the lens so that dust particles and dirt are preventing from contaminating the lens.

    3. The reflector is capable of rotating through 360° to reflect an image of an object onto the photo-sensitive element through the lens. Therefore, the viewing angle of the image-capturing device is increased to facilitate the operation of the image-capturing device.

    4. The optical axis of the lens of the present invention is set along a width or length direction of the handheld electronic device, which has a size much larger than that of a thickness direction of the handheld electronic device along which the optical axis of the lens of the prior art of FIG. 1 is set. Therefore, there is more space in the present invention to accommodate the lens, and the lens accordingly can be a group lens, rather than the single lens according to the prior art. Accordingly, the image-capturing device according to the present invention can have a better resolution capability.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

**Claims**

1.  A rotatable image-capturing device for a handheld electronic device, comprising:

    a lens with an optical axis;
    a photo-sensitive element set up at one end of the optical axis;
    a reflector set up at another end of the optical axis, reflector forming an included angle with the optical axis for reflecting image from an object through the lens onto the photo-sensitive element; and
    a rotatable reflector seat rotatably set up around the lens with the reflector attached to the reflector seat such that the reflector can rotate around the lens, wherein the reflector can also be moved toward the lens to protect the lens from dust and contaminant.

2.  The image-capturing device of claim 1, wherein the photo-sensitive element comprises a complementary metal-oxide-semiconductor (CMOS).

3.  The image-capturing device of claim 1, wherein the photo-sensitive element comprises a charge-coupled device (CCD).

4.  The image-capturing device of claim 1, wherein the device further comprises at least a reflector support lever for pivotably linking the reflector to the rotatable reflector seat such that the reflector, which is pivoted to the rotatable reflector seat, can move closer or farther away from the seat within an angular movement set by the reflector support lever.

5.  The image-capturing device of claim 1, wherein the reflector has a planar reflecting surface.

6.  The image-capturing device of claim 1, wherein the reflector has a curved reflecting surface.

7.  The image-capturing device of claim 1, wherein the included angle is 45 degrees.

8.  The image-capturing device of claim 1, where the optical axis of the lens is along a width direction of the handheld electronic device.

9.  The image-capturing device of claim 1, wherein the optical axis of the lens is along a length direction of the handheld electronic device.

10. The image-capturing device of claim 8, wherein the handheld electronic device is a clamshell type mobile phone.

11. The image-capturing device of claim 9, wherein the handheld electronic device is a bar type mobile phone.

12. A handheld electronic device, comprising:

    a main body casing having a plurality of buttons for inputting data;
    a lens set up on one side edge of the main body casing, wherein the lens has an optical axis;
    a photo-sensitive element set up inside the main body casing at one end of the optical axis of the lens; and
    a reflector set up on the main body casing at another end of the optical axis of the lens such that a reflecting surface on the reflector forms an included angle with the optical axis for reflecting an image of an object through the lens and onto the photo-sensitive element, wherein the reflector can be moved toward the lens to protect the lens from dust and contaminant.

13. The handheld electronic device of claim 12, wherein the device further comprises a rotatable reflector seat set up on the main body casing around the lens with the reflector attached thereto such that the reflector on rotatable reflector seat can rotate around the lens.

14. The handheld electronic device of claim 13 further comprising at least a reflector support lever that pivotably links the reflector and the rotatable reflector seat together.

15. The handheld electronic device of claim 14, wherein an end section of the reflector further comprises a connecting rod for pivoting to the rotatable reflector seat.

16. The handheld electronic device of claim 13, wherein the photo-sensitive element is a CCD (charge-coupled device).

**17.** The handheld electronic device of claim 13, wherein the photo-sensitive element is a CMOS (complementary metal-oxide-semiconductor).

**18.** The handheld electronic device of claim 13, wherein the included angle is 45 degrees.

**19.** The handheld electronic device of claim 13, wherein the optical axis of the lens extends along at least one of width and length directions of the handheld electronic device.

**20.** A handheld electronic device comprising:

a pivot structure;
a flip cover connected to the pivot structure, a display mounted on the flip cover;
a main body casing connected to the pivot structure in a manner that the main body casing is pivotable relative to the flip cover, a keypad mounted on the main body casing;
a lens and a photo-sensitive element fixedly mounted in the pivot structure, wherein an optical axis of the lens extends in a direction for which the pivot structure extends;
a reflector mounted on the pivot structure and forming an included angle with and rotatable about the optical axis of the lens so that the reflector can reflect images of objects from different directions along the optical axis of the lens through the lens to reach on the photo-sensitive element.

FIG. 1 (PRIOR ART)

FIG. 2A

FIG. 2B

240

242

232

234

200

FIG. 3

242

240

232

234

200

FIG. 4

FIG. 5

FIG. 6

FIG. 7

FIG. 8

FIG. 9

636
638
640
634
642
644

632

600

FIG. 10

European Patent
Office

**EUROPEAN SEARCH REPORT**

Application Number

EP 03 02 5602

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | PATENT ABSTRACTS OF JAPAN vol. 1999, no. 12, 29 October 1999 (1999-10-29) & JP 11 205641 A (MINOLTA CO LTD), 30 July 1999 (1999-07-30) * abstract; figure 4 * | 1-3,5,7, 8,12,13, 15-19 | H04M1/02 H04N5/225 |
| A | US 2002/076087 A1 (LEE YONG BEOM ET AL) 20 June 2002 (2002-06-20) * abstract * | 2,16 | |
| A | US 2003/109232 A1 (KIM JIN-WOO ET AL) 12 June 2003 (2003-06-12) * paragraph [0025]; figures 1-3 * | 20 | |
| A | PATENT ABSTRACTS OF JAPAN vol. 2002, no. 10, 10 October 2002 (2002-10-10) -& JP 2002 176572 A (MINOLTA CO LTD), 21 June 2002 (2002-06-21) * abstract * | 20 | TECHNICAL FIELDS SEARCHED (Int.Cl.7) |
| A | US 2003/036365 A1 (KURODA MITURU) 20 February 2003 (2003-02-20) * abstract * | 20 | H04M H04N H04Q G03B G04B |

The present search report has been drawn up for all claims

| Place of search | Date of completion of the search | Examiner |
|---|---|---|
| Berlin | 20 September 2004 | Kampouris, A |

EP 1 530 344 A1

| | | Application Number |
|---|---|---|
| European Patent Office | | **Application Number**<br>EP 03 02 5602 |

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-3, 5, 7, 8, 12, 13, 15-18, 19 (in part, Rule 30(2) EPC), 20

☐ None of the further search fees have been paid within the fixed time limit. The present European search report has been drawn up for those parts of the European patent application which relate to the invention first mentioned in the claims, namely claims:

19

**European Patent Office**

**LACK OF UNITY OF INVENTION
SHEET B**

**Application Number**

EP 03 02 5602

The Search Division considers that the present European patent application does not comply with the requirements of unity of invention and relates to several inventions or groups of inventions, namely:

1. claims: 1-3, 5, 7, 8, 12, 13, 15-18, 19 (in part, Rule 30(2) EPC)

   A rotatable image-capturing device wherein the photo-sensitive element comprises a complementary metal-oxide-semiconductor (CMOS).

   ---

2. claim: 4 14

   An image-capturing device a reflector support lever that pivotably links the reflector and the rotatable reflector seat together.

   ---

3. claim: 6

   An image-capturing device comprising a reflector having a curved reflecting surface.

   ---

4. claims: 9, 19 (in part, Rule 30(2) EPC)

   An image-capturing device wherein the optical axis of the lens is along a length direction of the handheld electronic device.

   ---

5. claim: 10

   An image-capturing device in the form of a clamshell type mobile phone.

   ---

6. claim: 11

   An image-capturing in the form of a bar type mobile phone.

   ---

7. claim: 20

   A handheld electronic device comprising a pivot structure, wherein a lens and a photo-sensitive element are fixedly mounted in the pivot structure, an optical axis of the lens being extended in a direction for which the pivot structure extends.

   ---

**EP 1 530 344 A1**

**ANNEX TO THE EUROPEAN SEARCH REPORT
ON EUROPEAN PATENT APPLICATION NO.**

EP 03 02 5602

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2004

| Patent document cited in search report | | | Publication date | Patent family member(s) | | | Publication date |
|---|---|---|---|---|---|---|---|
| JP 11205641 | | A | 30-07-1999 | US | 2002067426 | A1 | 06-06-2002 |
| US 2002076087 | | A1 | 20-06-2002 | KR | 2002032765 | A | 04-05-2002 |
| | | | | JP | 3479641 | B2 | 15-12-2003 |
| | | | | JP | 2002150293 | A | 24-05-2002 |
| US 2003109232 | | A1 | 12-06-2003 | KR | 2003047225 | A | 18-06-2003 |
| JP 2002176572 | | A | 21-06-2002 | NONE | | | |
| US 2003036365 | | A1 | 20-02-2003 | JP | 2003060765 | A | 28-02-2003 |
| | | | | CN | 1402499 | A | 12-03-2003 |
| | | | | GB | 2379828 | A ,B | 19-03-2003 |

EPO FORM P0459

For more details about this annex : see Official Journal of the European Patent Office, No. 12/82

21